(19) Europäisches Patentamt
European Patent Office
Office européen des brevets

(11) **EP 4 507 226 A1**

(12) **EUROPEAN PATENT APPLICATION**

(43) Date of publication:
**12.02.2025 Bulletin 2025/07**

(21) Application number: **24191570.1**

(22) Date of filing: **29.07.2024**

(51) International Patent Classification (IPC):
**H04L 1/1829** (2023.01)

(52) Cooperative Patent Classification (CPC):
**H04L 1/1861; H04L 1/1854**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 US 202363531706 P**
**26.07.2024 US 202418785235**

(71) Applicant: **Apple Inc.**
**Cupertino, CA 95014 (US)**

(72) Inventors:
• **YE, Chunxuan**
**San Diego, California (US)**
• **WU, Dan**
**Beijing, China (CN)**
• **ZHANG, Dawei**
**Saratoga, California (US)**
• **HE, Hong**
**San Jose, California (US)**
• **NIU, Huaning**
**San Jose, California (US)**
• **ZENG, Wei**
**Saratoga, California (US)**
• **YANG, Weidong**
**San Diego, California (US)**

(74) Representative: **Simmons & Simmons**
**City Point**
**One Ropemaker Street**
**London EC2Y 9SS (GB)**

(54) **RESOURCE MAPPING TECHNIQUES FOR SIDELINK FEEDBACK TRANSMISSION**

(57) In accordance with aspects of the present disclosure, a user equipment (UE) may receive a physical sidelink shared channel (PSSCH) transmission via a slot i and a sub-channel *j*. The UE may determine, within a resource block (RB) set k and a physical sidelink feedback channel (PSFCH) transmission occasion n, at least one interlace to use for a PSFCH transmission based at least in part on an index of the slot i, an index of the sub-channel *j*, a PSFCH periodicity, and a quantity of sub-channels in the RB set k. The UE may transmit the PSFCH transmission via the at least one interlace in the RB set *k* during the PSFCH transmission occasion *n.* The PSFCH transmission may include feedback for the PSSCH transmission.

801

RECEIVE PSSCH TRANSMISSION VIA SLOT AND SUB-CHANNEL — 812

DETERMINE, WITHIN AN RB SET AND A PSFCH TRANSMISSION OCCASION, AT LEAST ONE INTERLACE TO USE FOR A PSFCH TRANSMISSION BASED ON AN INDEX OF THE SLOT, AN INDEX OF THE SUB-CHANNEL, A PSFCH PERIODICITY, AND A QUANTITY OF SUB-CHANNELS IN THE RB SET — 814

TRANSMIT THE PSFCH TRANSMISSION VIA THE AT LEAST ONE INTERLACE IN THE RB SET DURING THE PSFCH TRANSMISSION OCCASION, THE PSFCH TRANSMISSION INCLUDING FEEDBACK FOR THE PSSCH TRANSMISSION — 816

FIG. 8B

**Description**

**CROSS-REFERENCE TO RELATED APPLICATIONS**

This application claims the benefit of U.S. Provisional Patent Application No. 63/531,706, filed August 9, 2023, the entirety of which is incorporated herein by reference.

**BACKGROUND**

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5GNR). The wireless communication networks facilitate mobile broadband service using technologies such as OFDM, multiple input multiple output (MIMO), advanced channel coding, massive MIMO, beamforming, and/or other features.

**SUMMARY**

Aspects of the embodiments are directed to a method performed by a user equipment (UE) to communicate with another UE using a sidelink in an unlicensed spectrum, the method including determining a total number of Physical Sidelink Feedback Channel (PSFCH) interlaces over one resource block (RB) set in each PSFCH periodicity, where the total number of PSFCH interlaces for each Physical Sidelink Shared Channel (PSSCH) or Physical Sidelink Control Channel (PSCCH) transmission is at least one, and where the PSFCH interlaces are naturally indexed; allocating a PSFCH interlace for a corresponding PSSCH resource; determining a number of PSFCH resources available for multiplexing hybrid automatic repeat request acknowledgement (HARQ-ACK) in a PSFCH transmission; determining indices of PSFCH resources for a PSFCH transmission with HARQ-ACK information in response to receiving a PSSCH reception or PSCCH reception; and transmitting PSFCH to a UE using the PSFCH resources.
In some embodiments, the total number of PSFCH interlaces for each PSSCH or PSCCH is one.
In some embodiments, allocating the PSFCH resources includes allocating a PSFCH interlace with the same interlace index as the corresponding PSSCH resource.
In some embodiments, the PSFCH interlace index is determined based on the PSSCH interlace index $j$, and the PSSCH transmission slot $i$ among the PSSCH slots associated with the PSFCH slot.
In some embodiments, the PSFCH interlace index is different for an MCSt PSSCH resource interlace index.
In some embodiments, the PSSCH interlace index considers PSFCH retransmissions.
In some embodiments, PSSCH transmission slot #i and the PSSCH interlace index #j are determined based on:

$$0 \leq i < N_{PSSCH}^{PSFCH} \cdot N_{reTx}, \ 0 \leq j < M_{interlace,set}^{PSFCH}$$

In some embodiments, the PSFCH interlace index is determined by one of:

$$(i + j) mod N_{interlace,set}^{PSFCH} \text{ or}$$

$$(i + j \cdot N_{PSSCH}^{PSFCH} \cdot N_{reTx}) mod N_{interlace,set}^{PSFCH}$$

or

$$(j + i \cdot M_{interlace,set}^{PSFCH}) mod N_{interlace,set}^{PSFCH},$$

or

$$(i + j \cdot N_{PSSCH}^{PSFCH} \cdot N_{reTx} + X) mod N_{interlace,set}^{PSFCH},$$

with X being an integer (pre-)configured per resource pool.

In some embodiments, the PSFCH interlace index is determined based on the PSSCH interlace $j$, the PSSCH transmission slot $i$ among the PSSCH slots for the $k$-th retransmission associated with the PSFCH slot.

In some embodiments, PSSCH transmission slot #i and the PSSCH interlace index #j are determined based on:

$$0 \le i < N_{PSSCH}^{PSFCH}, 0 \le j < M_{interlace,set}^{PSFCH}, 0 \le k < N_{reTx}.$$

In some embodiments, the PSFCH interlace index is determined by one of:

$$(i + j + k) mod N_{interlace,set}^{PSFCH},$$

or

$$(i + j \cdot N_{PSSCH}^{PSFCH} + k \cdot N_{PSSCH}^{PSFCH} \cdot M_{interlace,set}^{PSFCH}) mod N_{interlace,set}^{PSFCH}$$

or

$$(i + k \cdot N_{PSSCH}^{PSFCH} + j \cdot N_{PSSCH}^{PSFCH} \cdot N_{reTx}) mod N_{interlace,set}^{PSFCH}.$$

In some embodiments, determining the number of PSFCH resources available for multiplexing HARQ-ACK in a PSFCH transmission includes determining the number of PSFCH resources as

$$R_{interlace,CS}^{PSFCH} = N_{type}^{PSFCH} \cdot \lfloor \frac{N_{CS}^{PSFCH}}{N_{PSSCH}^{PSFCH} \cdot N_{reTx}} \rfloor,$$

where:

$N_{CS}^{PSFCH}$ is a (pre)configured number of cyclic shift pairs,

$N_{type}^{PSFCH} = 1$ or $N_{subch}^{PSSCH}$ by (pre)configuration,

$N_{PSSCH}^{PSFCH}$ is a periodicity of PSFCH with values in a set of {1,2,4}, and

$N_{reTx}$ is the number of associated candidate PSFCH occasion(s) with values in a set of {1,2,3,4}.

In some embodiments, determining the indices of PSFCH resources for a PSFCH transmission with HARQ-ACK includes determining the indices as

$$(P_{ID} + M_{ID}) mod R_{interlace,CS}^{PSFCH}.$$

In some embodiments, the PSFCH resources are index according to an ascending order of cyclic shift pair index from $N_{CS}^{PSFCH}$ cyclic shift pairs.

In some embodiments, the UE does not have to transmit multiple PSFCHs on the same dedicated interlace with different cyclic shifts.

In some embodiments, the UE uses prioritization between PSFCH transmissions can be used to reduce the number of PSFCH transmissions.

In some embodiments, each PSFCH transmission occupies one dedicated interlace.

In some embodiments, there is one PSFCH transmission occasion for a PSSCH or PSCCH transmission and one-slot of PSFCH periodicity.

In some embodiments, the UE supports PRB-level cyclic shift hopping based on resource pool (pre)configuration (where the term (pre)configuration implies either pre-configuration or configuration at the time).

In some embodiments, PRB-level cyclic shift hopping is either enabled or disabled for the whole resource pool or for each RB set in the resource pool.

In some embodiments, the UE supports PRB-level cyclic shift hopping based on an in indication in a sidelink control information (SCI) message.

In some embodiments, the indication in the SCI message is received on one of an SCI stage 1 or SCI stage 2 message.

In some embodiments, the SCI message includes a 1-bit field to indicate whether PRB-level cyclic shift hopping is enabled or disabled.

In some embodiments, the cyclic shift of neighbor PRBs is increased by A, where A is (pre)configured per resource pool or per RB set.

In some embodiments, each PSFCH transmission occupies 1 common interlace and K3 dedicated PRB(s).

In some embodiments, K3 is (pre-)configured and has a value range in the set of {1, 2, 5}.

In some embodiments, K3 dedicated PRB(s) are on the same interlace.

In some embodiments, the common interlace index is pre-defined.

In some embodiments, the common interlace index is preconfigured or configured per resource pool or per resource block set.

In some embodiments, PSFCH sequences are transmitted on the common interlace.

Some embodiments include a cyclic shift ($m_0$) for indicating the cyclic shift pair index in generating PSFCH sequence on common interlace.

In some embodiments, the cyclic shift is common for all PSSCH transmissions, where $m_0$ is one of: (pre)defined, or (pre)configured, where the cyclic shift is preconfigured per resource pool or per resource block set.

In some embodiments, the cyclic shift depends on PSSCH transmission slot $i$ with the $k$-th retransmissions associated with PSFCH slot, PSSCH sub-channel $j$.

In some embodiments, the cyclic shift is based on

$$(i + j \cdot N_{PSFCH}^{PSSCH} \cdot N_{reTx}) mod N_{CS}^{PSFCH}.$$

Some embodiments include a cyclic shift ($m_{CS}$) of PSFCH sequence on common interlace.

In some embodiments, the cyclic shift is common for all PSSCH transmissions, where $m_0$ is one of: (pre)defined, or (pre)configured per resource pool or per resource block set.

In some embodiments, the cyclic shift is based on PSSCH transmission slot, PSSCH subchannels and PSSCH (re)transmissions.

In some embodiments, the cyclic shift is based on:

$$(i + j \cdot N_{PSFCH}^{PSSCH} \cdot N_{reTx}) mod N_{CS}^{PSFCH}.$$

Some embodiments include defining a number of guard band physical resource blocks (PRBs) derived based on 1 MHz and based on subcarrier spacing (SCS).

In some embodiments, the guard band is: 6 PRBs for an SCS of 15 kHz; 3 PRBs for an SCS of 30 kHz; and 2 PRBs for an SCS of 60 kHz.

In some embodiments, a default guard band PRBs is based on resource pool (pre)configuration.

In some embodiments, the (pre)configured guard band PRBs may be based on (pre)configured value.

Aspects of the embodiments are directed to a user equipment (UE) including one or more baseband processors and memory encoded with instructions that, when executed by the one or more baseband processors, cause the one or more baseband processors to perform the method of any preceding paragraphs.

Aspects of the embodiments are directed to a system including one or more processors and one or more storage devices on which are stored instructions that are operable, when executed by the one or more processors, to cause the one or more processors to perform the method of any of paragraphs above.

Aspects of the embodiments are directed to an apparatus configured to perform one or more operations described in the specification.

The details of one or more embodiments of these systems and methods are set forth in the accompanying drawings and the description below. Other features, objects, and advantages of these systems and methods will be apparent from the description and drawings, and from the claims.

## BRIEF DESCRIPTION OF THE FIGURES

FIG. 1 illustrates an example communication system that includes sidelink communications, according to some implementations.

FIG. 2 illustrates an example RB set where each PSFCH transmission occupies 1 common interlace and K3 dedicated PRB(s).

FIG. 3 illustrates an example RB set where each PSFCH transmission occupies 1 dedicated interlace.

FIG. 4A illustrates example PSFCH periodicity in the time domain.

FIGs. 4B and 4C illustrate example associations between PSSCH transmissions and PSFCH occasions.

FIGS. 5A-B illustrate an example sidelink resource interlace scheme for PSFCH and PSSCH transmissions.

FIGS. 6A-B illustrate another example sidelink resource interlace scheme for PSFCH and PSSCH transmissions.

FIG. 7 illustrates a cyclic shift hopping scheme for PSFCH resources.

FIG. 8A illustrates a flowchart of an example method for transmitting sidelink feedback information using resources in an unlicensed radio frequency spectrum band.

FIG. 8B illustrates a flowchart of another example method for transmitting sidelink feedback information using resources in an unlicensed radio frequency spectrum band.

FIG. 9 illustrates an example user equipment (UE), according to some implementations.

FIG. 10 illustrates an example access node, according to some implementations.

Like reference numbers indicate like features.

## DETAILED DESCRIPTION

Some unlicensed radio frequency spectrum bands, such as New Radio Unlicensed (NR-U), support sidelink operations. For example, a first wireless device (e.g., a first UE) may transmit a PSSCH transmission to a second wireless device (e.g., a second UE) using one or more PRBs in a sidelink resource pool of an unlicensed radio frequency spectrum band. Upon receiving the PSSCH transmission from the first wireless device, the second wireless device may transmit a PSFCH transmission (containing feedback, e.g., HARQ-ACK information, for the PSSCH transmission) via one or more PRBs in the sidelink resource pool.

In some cases, however, it may be unclear which resources (e.g., PRBs) to use for the PSFCH transmission. For example, if the second wireless device is configured to transmit the PSFCH transmission during a particular PSFCH occasion but the wireless medium is occupied (e.g., an LBT failure occurs), the second wireless device may have to delay the PSFCH transmission to a later slot. As such, the first wireless device may not know which PRB(s) to monitor for the PSFCH transmission. Also, the subsequent PSFCH retransmission from the second wireless device may collide or interfere with other PSFCH transmissions that overlap in time and/or frequency.

In accordance with aspects of the present disclosure, PRBs in the sidelink resource pool may be partitioned into different RB sets. Within an RB set, each PRB may have an associated interlace index (e.g., $j$ = 1, 2, 3) and slot index (e.g., $i$ = 1, 2, 3). An interlace refers to a group of PRBs or subcarriers with the same interlace index. The second wireless device may select at least one interlace (e.g., a group of PRBs with the same interlace index) to use for the PSFCH transmission based on the interlace index of the associated PSSCH transmission, the slot index of the PSSCH transmission, the number of subchannels in a given RB set of the sidelink resource pool, the PSFCH periodicity (e.g., the number of slots between two PSFCH occasions), or any combination thereof. The second wireless device may use some or all of the PRBs in the selected interlace(s) for the PSFCH transmission.

In some implementations, the second wireless device may receive control signaling that indicates a PSFCH interlace structure (dedicated or common) and/or a sidelink PSFCH RB set configuration. The PSFCH interlace type may configure the second wireless device to use a dedicated interlace structure (e.g., one dedicated interlace) and/or a common interlace structure (e.g., one common interlace and a number of dedicated PRBs) for PSFCH transmissions. The sidelink PSFCH RB set configuration may indicate which PRBs to use for a particular PSFCH transmission occasion. The second wireless device may transmit the PSFCH transmission according to the parameters indicated by the control signaling.

Aspects of the present disclosure improve the reliability, signaling overhead, and spectral efficiency of sidelink communications in unlicensed radio frequency spectrum bands. For example, the PSFCH resource mapping schemes described herein reduce the likelihood of signal collisions and improve the likelihood of successful PSFCH reception by enabling the second wireless device to use multiple PRBs of an interlace for a single PSFCH transmission. Additionally, RB sets in the sidelink resource pool may be configured with guard band PRBs to reduce the likelihood of collisions or interference between adjacent subcarriers. The described techniques may also support PRB-level cyclic shift hopping to reduce the peak to average power ratio (PAPR) of sidelink communications in unlicensed radio frequency spectrum bands.

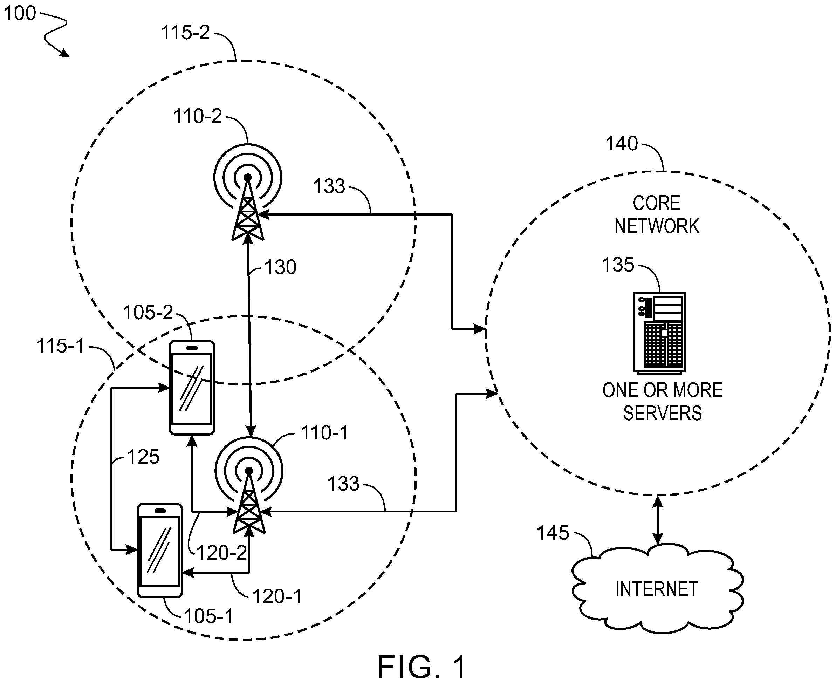

FIG. 1 illustrates an example communication system 100 that includes sidelink communications, according to some implementations. It is noted that the system of FIG. 1 is merely one example of a possible system, and that features of this disclosure may be implemented in other wireless communication systems.

The following description is provided for an example communication system that operates in conjunction with fifth generation (5G) networks as provided by 3GPP technical specifications. However, the example implementations are not limited in this regard and the described examples may apply to other networks that may benefit from the principles described herein, such as 3GPP Long Term Evolution (LTE) networks, Wi-Fi networks, and the like. Furthermore, other types of communication standards are possible, including future 3GPP systems (e.g., Sixth Generation (6G)), IEEE 802.16 protocols, or the like. While aspects may be described herein using terminology commonly associated with 5G NR, aspects of the present disclosure can be applied to other systems, such as systems subsequent to 5G (e.g., 6G).

Frequency bands for 5G NR may be separated into two different frequency ranges. Frequency Range 1 (FR1) may include frequency bands operating in sub-6 GHz frequencies, some of which are bands that may be used by previous standards, and may potentially be extended to cover new spectrum offerings from 410 MHz to 7125 MHz. Frequency Range 2 (FR2) may include frequency bands from 24.25 GHz to 52.6 GHz. Bands in the millimeter wave (mmWave) range of FR2 may have smaller coverage but potentially higher available bandwidth than bands in the FR1.

As shown, the communication system 100 includes a number of user devices. More specifically, the communication system 100 includes two UEs 105 (UE 105-1 and UE 105-2 are collectively referred to as "UE 105" or "UEs 105"), two base stations 110 (base station 110-1 and base station 110-2 are collectively referred to as "base station 110" or "base stations 110"), two cells 115 (cell 115-1 and cell 115-2 are collectively referred to as "cell 115" or "cells 115"), and one or more servers 135 in a core network (CN) 140 that is connected to the Internet 145.

In some implementations, the UEs 105 can directly communicate with base stations 110 via links 120 (link 120-1 and link 120-2 are collectively referred to as "link 120" or "links 120"), which utilize a direct interface with the base stations referred to as a "Uu interface." Each of the links 120 can represent one or more channels. The links 120 are illustrated as an air interface to enable communicative coupling, and can be consistent with cellular communication protocols, such as a 3GPP LTE protocol, a LTE-based access to unlicensed spectrum (LTE-U), a 5G protocol, a NR protocol, an NR-based access to unlicensed spectrum (NR-U) protocol, and/or any of the other communications protocols discussed herein.

As shown, certain user devices may be able to conduct communications with one another directly, e.g., without an intermediary infrastructure device such as base station 110-1. In this example, UE 105-1 may conduct communications directly with UE 105-2. Similarly, the UE 105-2 may conduct communications directly with UE 105-1. Such peer-to-peer communications may utilize a "sidelink" interface such as a PC5 interface. In certain implementations, the PC5 interface supports direct cellular communication between user devices (e.g., between UEs 105), while the Uu interface supports cellular communications with infrastructure devices such as base stations. For example, the UEs 105 may use the PC5 interface for a radio resource control (RRC) signaling exchange between the UEs (also called PC5-RRC signaling). The PC5/Uu interfaces are used only as an example, and PC5 as used herein may represent various other possible wireless communications technologies that allow for direct sidelink communications between user devices, while Uu in turn may represent cellular communications conducted between user devices and infrastructure devices, such as base stations.

In some implementations, the UEs 105 may be configured with parameters for communicating via the Uu interface and/or the sidelink interface. In some examples, the UEs 105 may be "pre-configured" with some parameters. In these examples, the parameters may be hardwired into the UEs 105 or coded into spec. Additionally and/or alternatively, the UEs 105 may receive the parameters from the one or more of the base stations 110.

To transmit/receive data to/from one or more base stations 110 or UEs 105, the UEs 105 may include a transmitter/receiver (or alternatively, a transceiver), memory, one or more processors, and/or other like components that enable the UEs 105 to operate in accordance with one or more wireless communications protocols and/or one or more cellular communications protocols. The UEs 105 may have multiple antenna elements that enable the UEs 105 to maintain multiple links 120 and/or sidelinks 125 to transmit/receive data to/from multiple base stations 110 and/or multiple UEs 105. For example, as shown in FIG. 1, UE 105-1 may connect with base station 110-1 via link 120 and simultaneously connect with UE 105-2 via sidelink 125.

In some implementations, one or more sidelink radio bearers may be established on the sidelink 125. The sidelink radio bearers can include signaling radio bearers (SL-SRB) and/or data radio bearers (SL-DRB).

The PC5 interface may alternatively be referred to as a sidelink interface and may include one or more logical channels, including but not limited to a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), Physical Sidelink Feedback Channel (PSFCH), and/or any other like communications channels. The PSFCH carries feedback related to the successful or failed reception of a sidelink transmission. The PSSCH can be scheduled by sidelink control information (SCI) carried in the sidelink PSCCH. In some examples, the sidelink interface can operate on an unlicensed spectrum (e.g., in the unlicensed 5 Gigahertz (GHz) and 6 GHz bands) or a (licensed) shared spectrum.

In one example, the sidelink interface implements vehicle-to-everything (V2X) communications. The V2X communications may, for example, adhere to 3GPP Cellular V2X (C-V2X) specifications, or to one or more other or subsequent standards whereby vehicles and other devices and network entities may communicate. V2X communications may utilize both long-range (e.g., cellular) communications as well as short- to medium-range (e.g., non-cellular) communications. Cellular-capable V2X communications may be called Cellular V2X (C-V2X) communications. C-V2X systems may use various cellular radio access technologies (RATs), such as 4G LTE or 5G NR RATs (or RATs subsequent to 5G, e.g., 6G RATs). Certain LTE standards usable in V2X systems may be called LTE-Vehicle (LTE-V) standards. As used herein in the context of V2X systems, and as defined above, the term "user devices" may refer generally to devices that are associated with mobile actors or traffic participants in the V2X system, e.g., mobile (able-to-move) communication devices such as vehicles, pedestrian user equipment (PUE) devices, and road side units (RSUs).

In some implementations, UEs 105 may be physical hardware devices capable of running one or more applications, capable of accessing network services via one or more radio links 120 with a corresponding base station 110 (also referred to as a "serving" base station), and capable of communicating with one another via sidelink 125. Link 120 may allow the UEs 105 to transmit and receive data from the base station 110 that provides the link 120. The sidelink 125 may allow the UEs 105 to transmit and receive data from one another. The sidelink 125 between the UEs 105 may include one or more channels for transmitting information from UE 105-1 to UE 105-2 and vice versa and/or between UEs 105 and UE-type RSUs and vice versa.

In some implementations, the base stations 110 are capable of communicating with one another over a backhaul connection 130 and may communicate with the one or more servers 135 within the CN 140 over another backhaul connection 133. The backhaul connections can be wired and/or wireless connections.

In some implementations, the communication system 100 supports different cast types, including unicast, broadcast, and groupcast (or multicast) communications. Unicast refers to direction communications between two UEs 105. Broadcast refers to a communication that is broadcast by a single UE 105 to a plurality of other UEs 105. Groupcast refers to communications that are sent from a single UE 105 to a set of UEs 105 that satisfy a certain condition (e.g., being a member of a particular group).

In some implementations, an exceptional resource pool may be configured for the UEs 105, perhaps by the base stations 110. The exceptional resource pool includes resources that the UEs 105 can use in exceptional cases, such as Radio Link Failure (RLF). The exceptional resource pool may include resources selected based on a random allocation of resources.

In some implementations, a UE 105 that is initiating a communication with another UE 105 is referred to as a transmitter UE (TX UE), and the UE 105 receiving the communication is referred to as a receiver UE (RX UE). For example, UE 105-1 may be a TX UE and UE 105-2 may be an RX UE. Although FIG. 1 illustrates a single TX UE communicating with a single RX UE, a TX UE may communicate with more than one RX UE via sidelink.

In some implementations, the UEs 105 are configured to use a resource pool for sidelink communications. A sidelink resource pool defines the time-frequency resources used for sidelink communications, and may be divided into multiple time slots, frequency channels, and frequency sub-channels. In some examples, the UEs 105 are synchronized and perform sidelink transmissions aligned with slot boundaries. A UE 105 may be expected to select several slots and sub-channels for transmission of the transport block. In some examples, a UE 105 may use different sub-channels for transmission of the transport block across multiple slots within its own resource selection window.

In some implementations, a TX UE that is initiating sidelink communication may determine the available resources (e.g., sidelink resources) and may select a subset of these resources to communicate with an RX UE based on a resource allocation scheme. Example resource allocation schemes include Mode 1 and Mode 2 resource allocation schemes. In Mode 1 resource allocation scheme (referred to as "Mode 1"), the resources are allocated by a network node for in-coverage UEs. In Mode 2 resource allocation scheme (referred to as "Mode 2"), the TX UE selects the sidelink resources (e.g., sidelink transmission resources).

As described herein, NR may support sidelink operations using unlicensed spectrum. Channel access mechanisms from NR-U can be reused for SL-unlicensed (SL-U) operations. Existing sidelink resource reservation techniques may be applicable to SL-U operation, within the boundaries of unlicensed channel access mechanisms and operations.

For sidelink communications using the unlicensed spectrum, it may be unclear how to determine the association between a PSSCH/PSCCH transmission and a corresponding PSFCH transmission. In some cases, each PSFCH transmission may occupy 1 dedicated interlace. A general procedure is needed to map between PSSCH/PSCCH resource and a corresponding PSFCH resource. In addition, multiple associated candidate PSFCH occasion(s) may exist for a single PSSCH/PSCCH transmission. Also, each UE 105 may be capable of autonomously determining which PSFCH resources to use. Thus, a procedure is needed to correlate PSFCH with PSSCH/PSCCH (e.g., without assistance from a base station 110).

In accordance with aspects of the present disclosure, a TX UE may transmit a sidelink message to an RX UE via one or more PSSCH resources (e.g., PRBs) in an RB set of an unlicensed radio frequency spectrum band. Upon receiving the sidelink message, the RX UE may transmit feedback (such as HARQ-ACK information) for the sidelink message via at least one PSFCH interlace during a PSFCH occasion. The RX UE may determine which PSFCH interlace(s) to use based on an interlace index of the PSSCH resources, a slot index of the PSSCH resources, a sidelink transmission structure for PSFCH (dedicated interlace or common interlace), a sidelink PSFCH RB set list, a quantity of PSSCH slots associated with the PSFCH occasion, a quantity of sub-channels in the RB set, or any combination thereof.

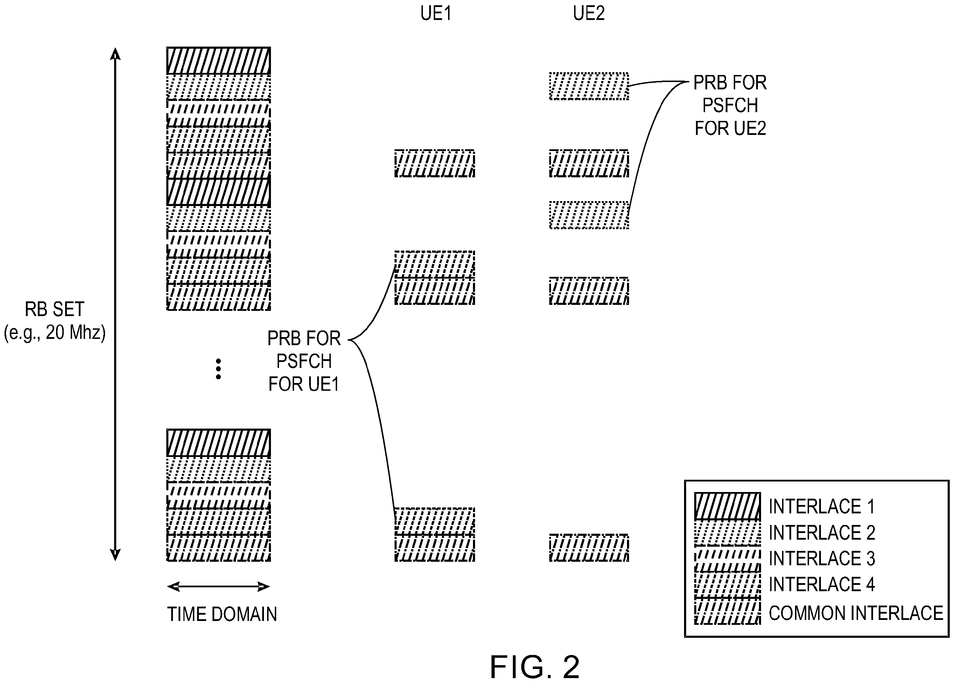

FIG. 2 shows an example RB set where each PSFCH transmission occupies 1 common interlace and K3 dedicated PRBs, where K3 is (pre-)configured within a defined value range. The dedicated PRBs are used in addition to the common interlace (e.g., a group of PRBs with a common interlace index). In some implementations, the dedicated PRBs carry ACK/NACK information for an earlier PSSCH transmission, and the common interlace carries other information (such as conflict information). In FIG. 2, for example, UE1 sends a PSFCH transmission over the common interlace and dedicated PRBs from interlace 4, while UE2 sends a PSFCH transmission over the common interlace and PRBs from interlace 2. As with other NR PSFCH transmissions, multiple cyclic shift pairs can be used for the K3 dedicated PRB(s). When a PRB of a common interlace and a dedicated PRB are within the same 1 MHz bandwidth, a UE may drop (e.g., refrain from using) the common PRB and transmit using the dedicated PRB, subject to occupied channel bandwidth (OCB) requirements.

A common interlace means that different UEs can use the same interlace for PSFCH transmissions. For example, suppose UE1 sends a PSSCH or PSCCH transmission to UE2, and UE3 sends a PSSCH or PSCCH transmission to UE4. When UE2 sends a corresponding PSFCH transmission to UE1 and UE4 sends a corresponding PSFCH transmission to UE3, their PSFCH transmissions could occupy the same interlace (time and frequency resources). An interlace may include 10 or 11 PRBs in an RB set. In some examples, PRBs belonging to the same interlace may have a fixed separation (e.g., 5 PRBs or 10 PRBs) therebetween.

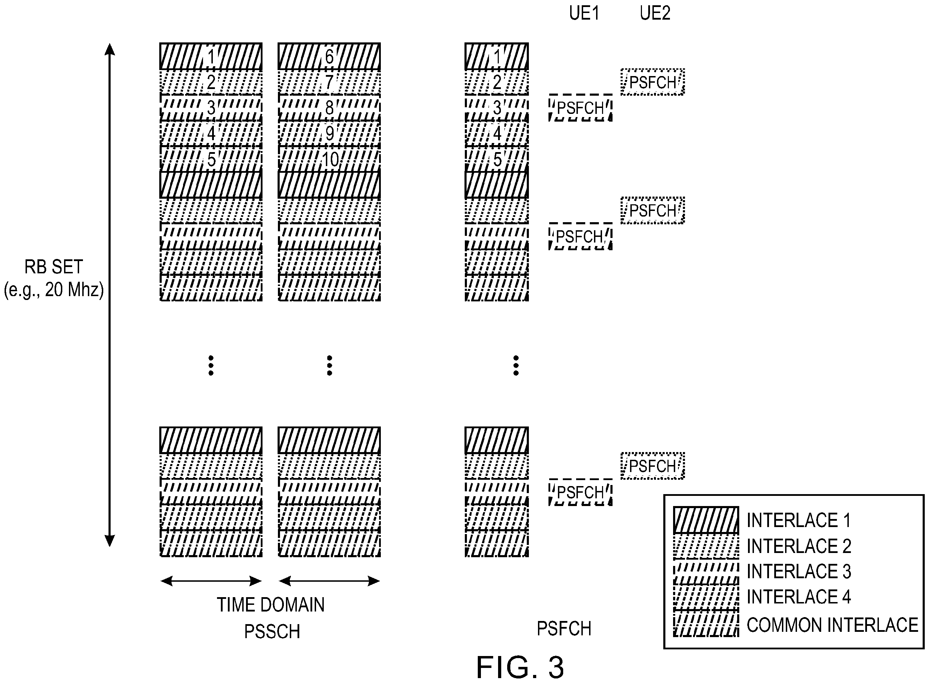

In the example of FIG. 3, each PSFCH transmission occupies 1 dedicated interlace. Here, instead of occupying a common interlace, the PSFCH uses only dedicated PRB(s). In some implementations, each PSFCH transmission may occupy K4 dedicated PRB(s) and K2 common PRBs, where the K2 common PRBs are located at the two edges of the RB set. In some cases, K2 is equal to 2 and K4 is (pre-)configured within a defined value range.

The PSFCH interlace patterns described herein are configured to meet power spectral density (PSD) limitations when PSFCH PRBs are distributed across dedicated and common interlace(s). In some implementations, there may be constraints on where the K4 dedicated PRB(s) and/or K2 common PRBs are located. For example, there may be a constraint on whether the K4 dedicated PRBs or the K2 common PRBs can be on the same interlace. In some examples, the K4 dedicated PRBs are selected from one interlace, and the K2 common PRBs are selected from another interlace. The interlace with the common PRBs may be different from the interlace with the dedicated PRBs. As shown in the example of FIG. 3, there may be a fixed frequency separation between two neighbor PRBs in the K4 dedicated PRBs.

NR sidelink PSSCH-PSFCH mapping techniques can be used for SL-U operations. In some implementations, PSSCH transmissions on non-overlapped resources can be mapped to non-orthogonal PSFCH resources. More than 6 cyclic shift pairs may be supported. Likewise, more than 1 PSFCH occasion(s) per PSCCH/PSSCH may be supported. As with NR-U, PRB-level cyclic shift hopping can also be used to reduce PAPR. In some implementations, guard band PRBs or resource elements (REs) may be positioned between common PRBs and dedicated PRBs to address in-band emission (IBE) issues.

In the example of FIG. 2, each PSFCH transmission occupies 1 common interlace and K3 dedicated PRB(s), where K3 is (pre-)configured and the value range for K3 at least includes { 1, 2, 5}. The K3 dedicated PRB(s) may be a part of the same interlace. As shown in FIG. 2, UE1 and UE2 both use the common interlace, as well as a set of dedicated PRBs. In this example, UE1 uses 2 dedicated PRBs from interlace 4, and UE2 uses 2 dedicated PRBs from interlace 2.

There can be some guard band PRB(s) between common PRBs and dedicated PRBs. The number of guard band PRB(s) can be variable or (pre-)configured. In some implementations, guard band PRB(s) may be configured by setting proper bit values in a bitmap for PSFCH PRB allocations. Additionally, or alternatively, a guard band RE may be configured between common PRBs and dedicated PRBs.

On the K3 dedicated PRB(s), multiple cyclic shift pairs can be used. When a PRB of common interlace and a dedicated PRB are within the same 1 MHz bandwidth, the UE may only transmit on the dedicated PRBs, subject to OCB requirements. In some examples, UE1 or UE2 may reduce transmit power on common PRBs. Alternatively, UE1 or UE2 may drop common PRBs if the dedicated PRBs can satisfy OCB requirements.

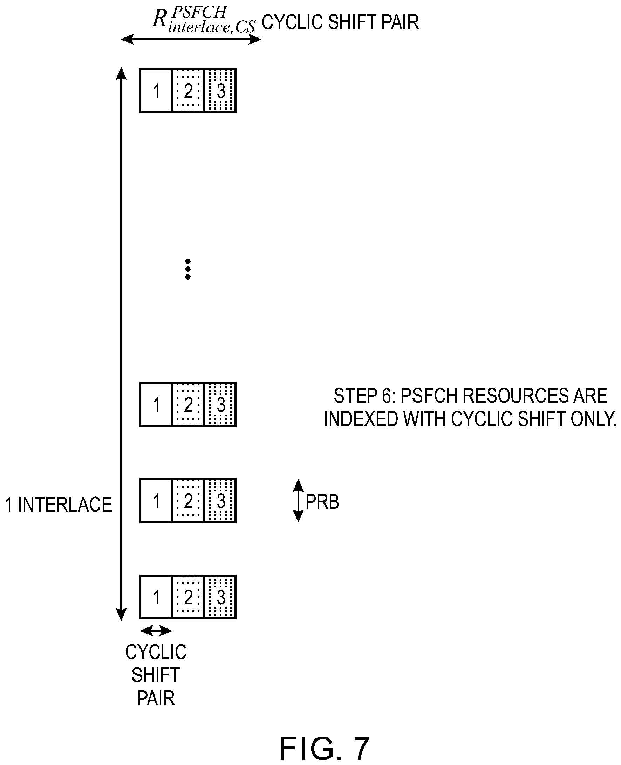

In the example of FIG. 3, each PSFCH transmission occupies 1 dedicated interlace. In this example, UE1 uses dedicated interlace 3 for PSFCH transmission, while UE2 uses dedicated interlace 2 for PSFCH transmission. PSSCH transmissions on non-overlapped resources can be mapped to orthogonal dedicated PRBs for PSFCH transmission. PRB-level cyclic shift hopping can be used to reduce PAPR (as with NR-U). This is shown in FIG. 7.

As described herein, one PSCCH/PSSCH transmission may have N associated candidate PSFCH occasion(s) with (pre-)configured locations. In some examples, the associated PSFCH occasion(s) are within the RB set(s) occupied by the PSSCH transmission(s). In other examples, the PSSCH transmission(s) and associated PSFCH occasion(s) are in the same or different RB set(s) of the same sidelink resource pool. For some PSCCH/PSSCH transmissions, the associated candidate PSFCH occasion(s) may be in different slots of the same RB set(s). In other examples, the associated candidate PSFCH occasion(s) are in different RB sets of the same slot.

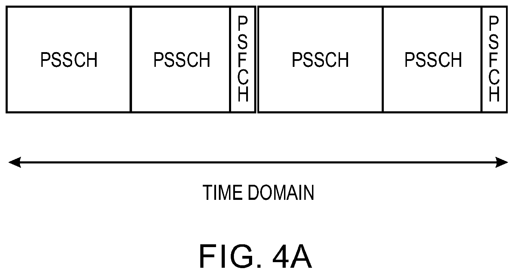

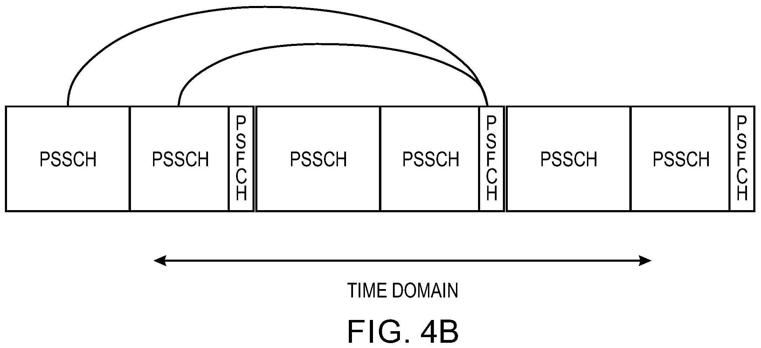

A resource mapping from PSSCH to PSFCH with a dedicated interlace is shown in FIG. 3. To identify a suitable PSFCH interlace, the RX UE (UE1 or UE2) may determine the total number of PSFCH interlaces over one RB set in each PSFCH periodicity $M^{PSFCH}_{interlace,set}$. For example, the periodicity could be one slot or two slots, and the number of PSFCH interlaces may be determined over the RB set for the associated periodicity. FIG. 4A illustrates an example PSFCH periodicity in the time domain, where the ratio of PSSCH slots to PSFCH occasions is 2:1. FIG. 4B illustrates an example association between two PSSCH slots and one PSFCH occasion. PSSCH transmissions that occur in these slots are mapped to different PRBs in the associated PSFCH occasion.

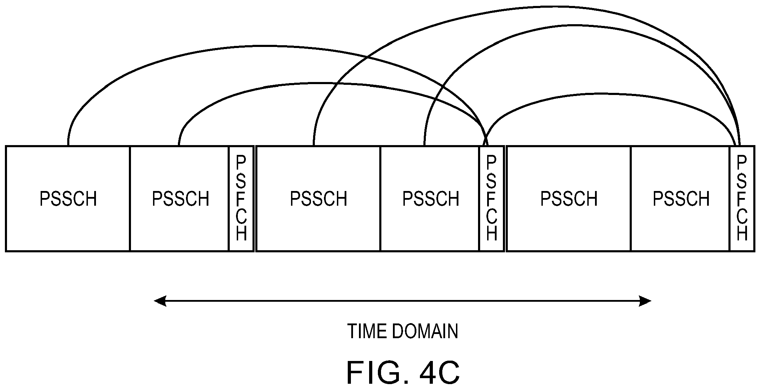

If the RX UE is unable to transmit PSFCH during the associated PSFCH occasion (e.g., due to an LBT failure), the RX UE may attempt to retransmit the PSFCH in a subsequent PSFCH occasion. This is shown in FIG. 4C. The total number of PSFCH interlaces for each PSSCH/PSCCH transmission is 1. This value may be predefined. A natural indexing of PSFCH interlaces over $M^{PSFCH}_{interlace,set}$ interlaces is shown in FIG. 3. Natural indexing is where sequential interlace index values (e.g., 1, 2, 3, 4) are assigned to consecutive or adjacent PRBs.

When the RX UE allocates the PSFCH interlace for the corresponding PSSCH transmission, the same interlace index may be used for PSFCH and PSSCH transmission. Alternatively, the RX UE may determine the PSFCH interlace based on the PSSCH interlace $j$ and the PSSCH transmission slot $i$ among the PSSCH slots associated with the PSFCH occasion. This can help avoid using the same PSFCH interlace for multi-consecutive slot transmissions (MCSt) PSSCH transmissions. In some implementations, the interlace index and slot index of the PSFCH interlace may be determined according to the following equation(s):

$$0 \le i < N^{PSFCH}_{PSSCH} \cdot N_{reTx}, \ 0 \le j < M^{PSFCH}_{interlace,set}$$

$$(i+j) mod N^{PSFCH}_{interlace,set}$$

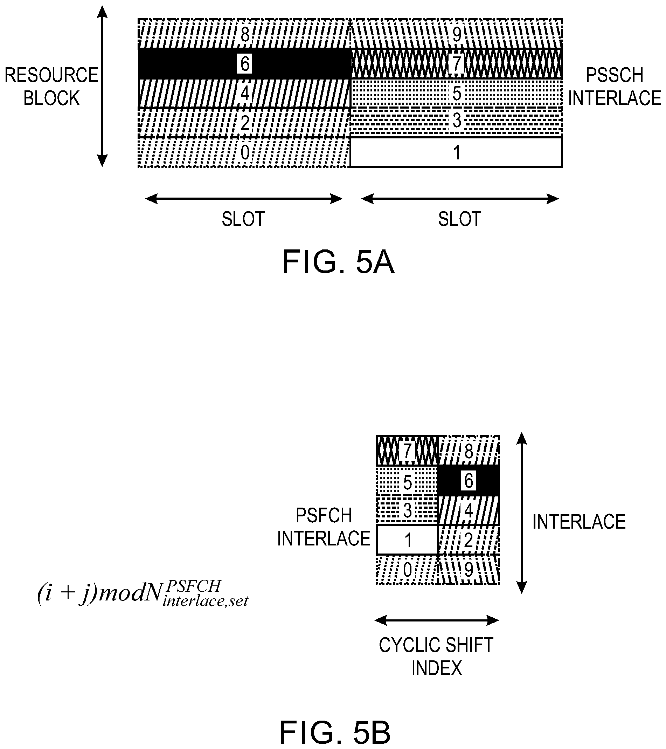

(shown in FIGS. 5A-B)

$$(i + j \cdot N^{PSFCH}_{PSSCH} \cdot N_{reTx}) mod N^{PSFCH}_{interlace,set}$$

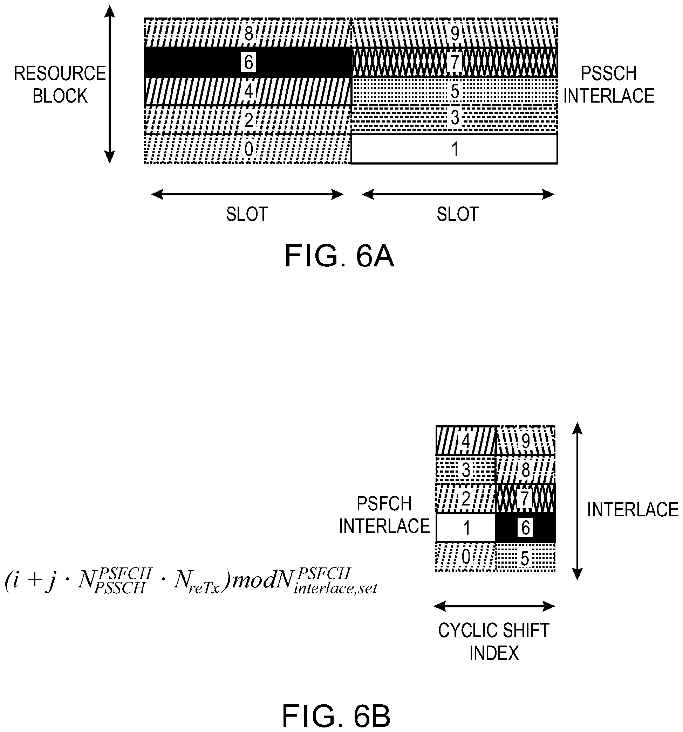

(shown in FIGS. 6A-B)

$$(j + i \cdot M^{PSFCH}_{interlace,set}) mod N^{PSFCH}_{interlace,set}$$

$$(i + j \cdot N^{PSFCH}_{PSSCH} \cdot N_{reTx} + X) mod N^{PSFCH}_{interlace,set},$$

where $i$ is the slot index, $j$ is the interlace index, $N^{PSFCH}_{PSSCH}$ is the PSFCH periodicity or number of PSSCH slots associated with one PSFCH occasion, $M^{PSFCH}_{interlace,set}$ is the PSFCH periodicity, $N^{PSFCH}_{interlace,set}$ is the number of PSFCH resources in a given interlace pattern, $N_{reTx}$ is the number of candidate PSFCH occasion(s) associated with a given PSSCH transmission, and X is an integer that is (pre-)configured per resource pool.

In other implementations, the PSFCH interlace is determined according to the following equations, which are based on the PSSCH interlace $j$ and the PSSCH transmission slot $i$ among the PSSCH slots for the $k$-th retransmission associated with the PSFCH slot:

$$0 \leq i < N^{PSFCH}_{PSSCH}, 0 \leq j < M^{PSFCH}_{interlace,set}, 0 \leq k < N_{reTx}.$$

$$(i + j + k) mod N^{PSFCH}_{interlace,set},$$

or

$$(i + j \cdot N^{PSFCH}_{PSSCH} + k \cdot N^{PSFCH}_{PSSCH} \cdot M^{PSFCH}_{interlace,set}) mod N^{PSFCH}_{interlace,set},$$

or

$$(i + k \cdot N^{PSFCH}_{PSSCH} + j \cdot N^{PSFCH}_{PSSCH} \cdot N_{reTx}) mod N^{PSFCH}_{interlace,set}$$

The RX UE may determine a number of PSFCH resources that are available for multiplexing HARQ-ACK in a PSFCH transmission according to the following equation:

$$R^{PSFCH}_{interlace,CS} = N^{PSFCH}_{type} \cdot \lfloor \frac{N^{PSFCH}_{CS}}{N^{PSFCH}_{PSSCH} \cdot N_{reTx}} \rfloor$$

where $N^{PSFCH}_{CS}$ is the (pre)configured number of cyclic shift pairs, $N^{PSFCH}_{type} = 1$ or $N^{PSSCH}_{subch}$ by (pre)configuration, $N^{PSFCH}_{PSSCH}$ is the periodicity of PSFCH with values of {1,2,4}, and $N_{reTx}$ is the number of associated candidate PSFCH occasion(s) with values of {1,2,3,4}. By considering potential PSFCH retransmissions, the association between PSFCH and PSSCH / PSCCH can be maintained.

PSFCH resources can be indexed according to an ascending order of the cyclic shift pair index from $N^{PSFCH}_{CS}$ cyclic shift pairs. Because different PSSCH transmissions can share the same interlace for PSFCH, the number of PSFCH resources for each PSSCH can be determined by the RX UE. FIG. 7 illustrates PSFCH resources that are indexed using cyclic shift. Accordingly, the RX UE determines the indices of PSFCH resources for a PSFCH transmission with HARQ-ACK information in response to a PSSCH reception, according to the following equation:

$$(P_{ID} + M_{ID}) mod R^{PSFCH}_{interlace,CS}$$

The RX UE can then communicate the HARQ-ACK information using the selected PSFCH resources. A UE may not have to transmit multiple PSFCHs on the same dedicated interlace with different cyclic shifts. Prioritization between PSFCH transmissions can be used to drop some PSFCH transmissions. The interlace scheme depicted in FIG. 3 (where each PSFCH transmission occupies 1 dedicated interlace) can be applied when N (the number of PSFCH transmission occasions for a PSSCH/PSCCH transmission) is 1 and p (the PSFCH periodicity) is 1 slot.

With MCSt, the TX UE uses more than 1 consecutive slot for data transmission. For example, if the TX UE sends PSSCH/PSCCH to the RX UE using resources 0 and 1 (as shown in FIG. 5A), the RX UE can use PSFCH resources 0 and 1 (as depicted in FIG. 5B), which occupy different PRBs. In the example of FIG. 5B, PSFCH resources 0 and 9 occupy the same PRB, with different cyclic shift pairs. The RX UE may be unable to send PSFCH using resources 0 and 9 simultaneously. However, the RX UE can send PSFCH using resources 0 and 1 simultaneously, since they occupy different PRBs.

With reference to FIG. 7, support for PRB-level cyclic shift hopping may depend on resource pool (pre) configuration. Cyclic shift hopping can be enabled or disabled for the whole resource pool, or for each RB set in the resource pool. Alternatively, support for PRB-level cyclic shift hopping can be based on an SCI indication, either SCI stage 1 or SCI stage 2. A 1-bit field can indicate whether PRB-level cyclic shift hopping is enabled or disabled. The cyclic shift of neighbor PRBs may be increased by A, where A is (pre)configured per resource pool or per RB set.

PRB-level cyclic shift hopping ($m_{int}$) may be applicable when each PSFCH transmission occupies 1 dedicated interlace (as shown in FIG. 3) and/or when each PSFCH transmission occupies 1 common interlace and K3 dedicated PRBs (as shown in FIG. 2). PRB-level cyclic shift hopping may be applicable to only common interlaces, only dedicated PRBs, or both common interlaces and dedicated PRBs.

In some examples, the common PSFCH interlace index for SL-U may be (pre-)defined (e.g., interlace 0). In other examples, the common interlace index may be (pre-)configured per resource pool or per RB set. For PSFCH sequences transmitted via the common interlace, the cyclic shift ($m_0$) of the PSFCH sequence on the common interlace can be common for all PSSCH transmissions, where $m_0$ is (pre)defined (e.g., 0) or (pre-)configured per resource pool or per RB set. Alternatively, the PSFCH sequence may depend on the PSSCH transmission slot $i$ with the $k$-th retransmission associated with the PSFCH slot and PSSCH sub-channel $j$, as shown in the following equation:

$$(i + j \cdot N_{PSFCH}^{PSSCH} \cdot N_{reTx}) mod N_{CS}^{PSFCH}$$

The cyclic shift ($m_{CS}$) of PSFCH sequences on the common interlace may be common for all PSSCH transmissions, where $m_0$ is (pre-)defined (e.g., 0) or (pre-)configured per resource pool or per RB set. Alternatively, the mcs may depend on the PSSCH transmission slot, PSSCH sub-channel(s) and PSSCH (re)transmissions, as shown in the following equation:

$$(i + j \cdot N_{PSFCH}^{PSSCH} \cdot N_{reTx}) mod N_{CS}^{PSFCH}$$

The parameter $m_0$ indicates the cyclic shift pair index within a set of configured cyclic shift pairs. This serves to multiplex UEs with different PSFCH sequences. In general, there are 12 PSFCH sequences, with cyclic shift values 0-11. Consider an example where 3 cyclic shift pairs are configured. In this example, the three cyclic shift pairs have indexes of {0, 2, 4}, where mcs generally carries the ACK or NACK information of the PSFCH transmission. The mcs value for NACK may be 0, and the mcs value for ACK may be 6.

The $m_0$ parameter, together with the mcs parameter, determine the final cyclic shift value (between 0 and 11) to use for generating a PSFCH sequence. Here, mcs plus $m_0$ gives the final cyclic shift value of the PSFCH sequence. Continuing with the example above, where $m_0$={0, 2, 4} and mcs ={0, 6}, UE1 can send a PSFCH sequence with a cyclic shift value of 0 for NACK and a cyclic shift value of 6 for ACK; UE2 can send a PSFCH sequence with a cyclic shift value of 2 for NACK and cyclic shift value of 8 for ACK; UE 3 can send a PSFCH sequence with a cyclic shift value of 4 for NACK and cyclic shift value of 10 for ACK. Here, the common interlace does not carry ACK or NACK information, and UE multiplexing is not necessary. Hence, the value of the cyclic shift pair index can be (pre)defined or pre-configured. It is not necessary to support UE multiplexing here, because the UEs use the same $m_0$ value. However, it is also possible to support UE multiplexing, where different UEs use different $m_0$ values. The $m_{CS}$ value usually carries ACK or NACK information. Here, the common interlace does not carry ACK or NACK information. Hence, the value of mcs can be pre-determined or preconfigured.

To derive the number of guard band PRB(s) between common PRBs and dedicated PRBs for PSFCH in SL-U, the guard band PRBs can be derived based on a 1 MHz spacing. For an SCS of 15 kHz, the number of guard band PRBs is 6. For an SCS of 30 kHz, the number of guard band PRBs is 3. For an SCS of 60 kHz, the number of guard band PRBs is 2.

This default number of guard band PRBs may be based on a resource pool (pre)configuration. If explicitly (pre)configured, the number of guard band PRBs may be based on a (pre)configured value. Otherwise, the number of guard band PRBs may be calculated as discussed above.

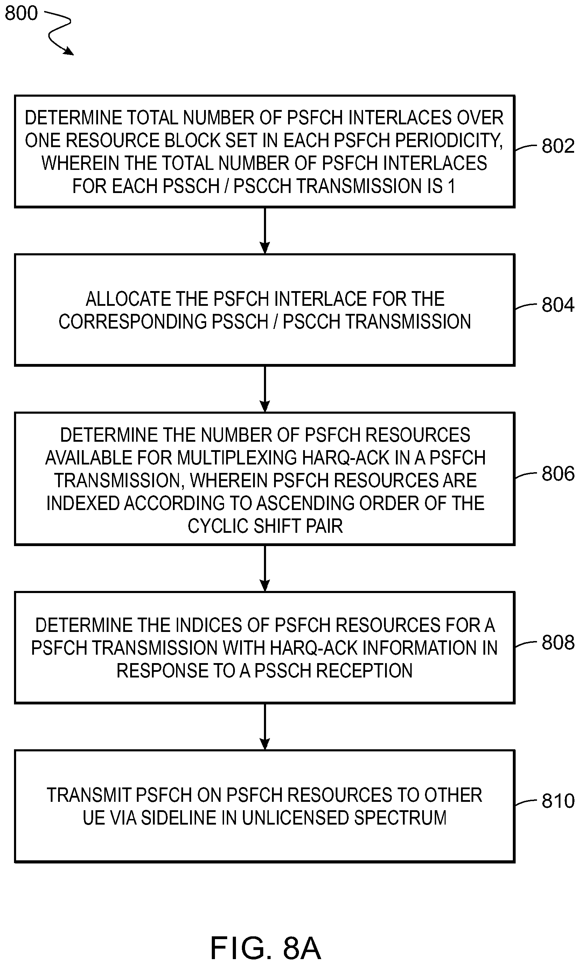

FIG. 8A illustrates a flowchart of an example method 800, according to some implementations. For clarity of presentation, the description that follows generally describes method 800 in the context of the other figures in this description. For example, method 800 can be performed by a UE (e.g., UE 105-1) of FIG. 1. It will be understood that method 800 can be performed, for example, by any suitable system, environment, software, hardware, or a combination of systems, environments, software, and hardware, as appropriate. In some implementations, various steps of method 800 can be run in parallel, in combination, in loops, or in any order.

At the outset, the total number of PSFCH interlaces for each PSSCH/PSCCH transmission is 1. At 802, the UE determines the total number of PSFCH interlaces over one RB set in each PSFCH periodicity $M_{interlace,set}^{PSFCH}$ . The PSFCH periodicity could be one slot or two slots, and the number of PSFCH interlaces over the RB set may be determined based on the PSFCH periodicity. The PSFCH interlaces can be indexed using natural indexing of PSFCH interlaces over $M_{interlace,set}^{PSFCH}$ interlaces.

At 804, the UE allocates the PSFCH interlace for the corresponding PSSCH transmission. In some implementations, the same interlace index is used for PSFCH and PSSCH transmission. In other implementations, the PSFCH interlace index is determined based on the PSSCH interlace index $j$ and the PSSCH transmission slot $i$ among PSSCH slots associated with the PSFCH slot/occasion.

The UE may refrain from using the same PSFCH interlace for MCSt PSSCH transmissions. The PSFCH indexing can be determined according to any one of the following equations, which account for retransmissions:

$$0 \le i < N_{PSSCH}^{PSFCH} \cdot N_{reTx}, \ 0 \le j < M_{interlace,set}^{PSFCH}.$$

$$(i + j) mod N_{interlace,set}^{PSFCH}$$

$$(i + j \cdot N_{PSSCH}^{PSFCH} \cdot N_{reTx}) mod N_{interlace,set}^{PSFCH}$$

$$(j + i \cdot M_{interlace,set}^{PSFCH}) mod N_{interlace,set}^{PSFCH}$$

$$(i + j \cdot N_{PSSCH}^{PSFCH} \cdot N_{reTx} + X) mod N_{interlace,set}^{PSFCH}$$

In some implementations, the PSFCH interlace is determined based on the PSSCH interlace $j$ and the PSSCH transmission slot $i$ among PSSCH slots for the $k$-th retransmission associated with the PSFCH slot, where:

$$0 \le i < N_{PSSCH}^{PSFCH}, 0 \le j < M_{interlace,set}^{PSFCH}, 0 \le k < N_{reTx}.$$

In other implementations, the PSFCH interlace index is determined according to any one of the following equations:

$$(i + j + k) mod N_{interlace,set}^{PSFCH}$$

$$(i + j \cdot N_{PSSCH}^{PSFCH} + k \cdot N_{PSSCH}^{PSFCH} \cdot M_{interlace,set}^{PSFCH}) mod N_{interlace,set}^{PSFCH}$$

$$(i + k \cdot N_{PSSCH}^{PSFCH} + j \cdot N_{PSSCH}^{PSFCH} \cdot N_{reTx}) mod N_{interlace,set}^{PSFCH}$$

At 806, the UE determines a number of PSFCH resources available for multiplexing HARQ-ACK in a PSFCH transmission according to the following equation:

$$R_{interlace,CS}^{PSFCH} = N_{type}^{PSFCH} \cdot \lfloor \frac{N_{CS}^{PSFCH}}{N_{PSSCH}^{PSFCH} \cdot N_{reTx}} \rfloor$$

where $N_{CS}^{PSFCH}$ is the (pre)configured number of cyclic shift pairs, $N_{type}^{PSFCH} = 1$ or $N_{subch}^{PSSCH}$ by (pre)configuration, $N_{PSSCH}^{PSFCH}$ is the periodicity of PSFCH with values of {1,2,4}, and $N_{reTx}$ is the number of associated candidate PSFCH occasion(s) with values of {1,2,3,4}.

At 808, the UE determines the indexing of PSFCH resources. PSFCH resources may be indexed in an ascending order of the cyclic shift pair index from $N_{CS}^{PSFCH}$ cyclic shift pairs. As an example, the UE can determine the indices of PSFCH resources for a PSFCH transmission with HARQ-ACK information in response to a PSSCH reception according to the following equation:

$$(P_{ID} + M_{ID}) mod R_{interlace,CS}^{PSFCH}$$

The UE does not have to transmit multiple PSFCH transmissions on the same dedicated interlace with different cyclic shifts. Prioritization between PSFCH transmissions can be used to drop some PSFCH transmissions. At 810, the UE transmits the PSFCH using the appropriate PSFCH interlace(s). The UE may transmit the PSFCH using some or all of the PRBs in the selected PSFCH interlace(s).

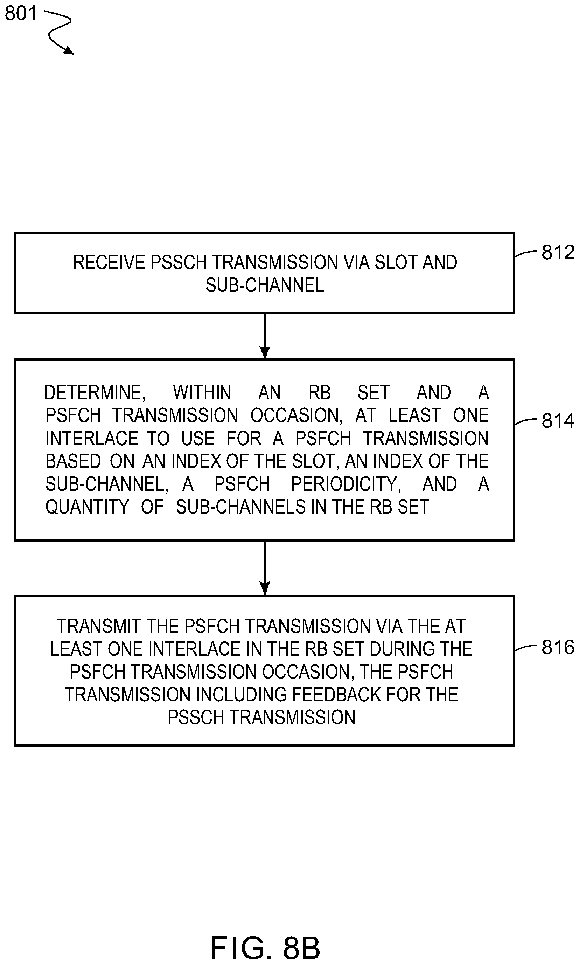

FIG. 8B illustrates a flowchart of an example method 801, according to some implementations. For clarity of presentation, the description that follows generally describes method 801 in the context of the other figures in this description. For example, method 801 can be performed by a UE (e.g., UE 105-1) of FIG. 1. It will be understood that method 801 can be performed, for example, by any suitable system, environment, software, hardware, or a combination of systems, environments, software, and hardware, as appropriate. In some implementations, various steps of method 801 can be run in parallel, in combination, in loops, or in any order.

At 812, the UE receives a PSSCH transmission via a slot *i* and a sub-channel *j*.

At 814, the UE determines, within an RB set *k* and a PSFCH transmission occasion *n*, at least one interlace to use for a PSFCH transmission based at least in part on an index of the slot *i*, an index of the sub-channel *j*, a PSFCH periodicity, and a quantity of sub-channels in the RB set *k*.

At 816, the UE transmits the PSFCH transmission via the at least one interlace in the RB set *k* during the PSFCH transmission occasion *n*, the PSFCH transmission including feedback for the PSSCH transmission.

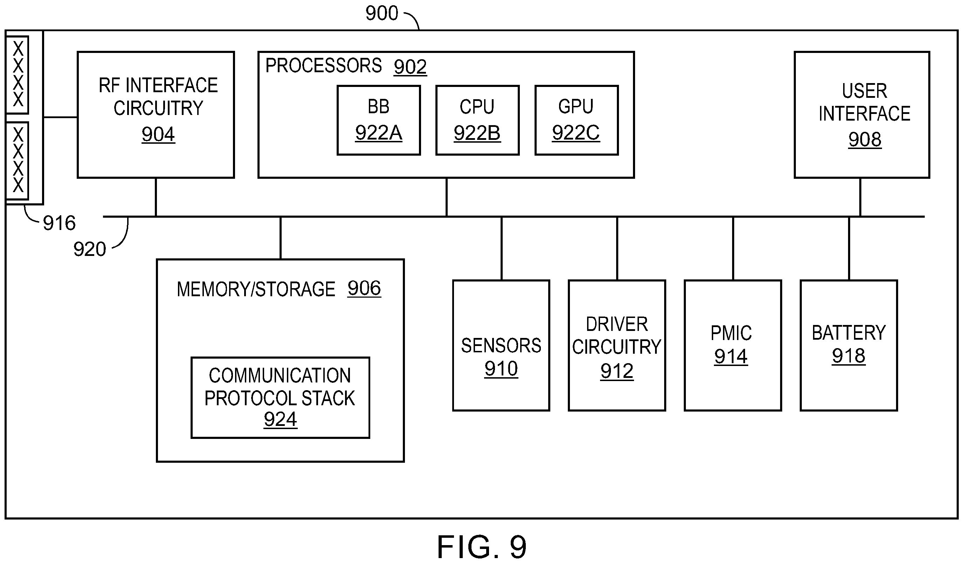

FIG. 9 illustrates an example UE 900, according to some implementations. The UE 900 may be similar to and substantially interchangeable with UEs 105 of FIG. 1. The UE 900 may be any mobile or non-mobile computing device, such as, for example, mobile phones, computers, tablets, industrial wireless sensors (for example, microphones, pressure sensors, thermometers, motion sensors, accelerometers, inventory sensors, electric voltage/current meters, etc.), video devices (for example, cameras, video cameras, etc.), wearable devices (for example, a smart watch), relaxed-IoT devices.

The UE 900 may include processors 902, RF interface circuitry 904, memory/storage 906, user interface 908, sensors 910, driver circuitry 912, power management integrated circuit (PMIC) 914, one or more antenna(s) 916, and battery 918. The components of the UE 900 may be implemented as integrated circuits (ICs), portions thereof, discrete electronic devices, or other modules, logic, hardware, software, firmware, or a combination thereof. The block diagram of FIG. 9 is intended to show a high-level view of some of the components of the UE 900. However, some of the components shown may be omitted, additional components may be present, and different arrangement of the components shown may occur in other implementations.

The components of the UE 900 may be coupled with various other components over one or more interconnects 920, which may represent any type of interface, input/output, bus (local, system, or expansion), transmission line, trace, optical connection, etc. that allows various circuit components (on common or different chips or chipsets) to interact with one another.

The processors 902 may include processor circuitry such as, for example, baseband processor circuitry (BB) 922A, central processor unit circuitry (CPU) 922B, and/or graphics processor unit circuitry (GPU) 922C. The processors 902 may include any type of circuitry or processor circuitry that executes or otherwise operates computer-executable instructions, such as program code, software modules, or functional processes from memory/storage 906 to cause the UE 900 to perform operations as described herein.

In some implementations, the baseband processor circuitry 922A may access a communication protocol stack 924 in the memory/storage 906 to communicate over a 3GPP compatible network. In general, the baseband processor circuitry 922A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 904. The baseband processor circuitry 922A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 906 may include one or more non-transitory, computer-readable media that includes instructions (for example, communication protocol stack 924) that may be executed by one or more of the processors 902 to cause the UE 900 to perform various operations described herein. The memory/storage 906 include any type of volatile or non-volatile memory that may be distributed throughout the UE 900. In some implementations, some of the memory/storage 906 may be located on the processors 902 themselves (for example, L1 and L2 cache), while other memory/storage 906 is external to the processors 902 but accessible thereto via a memory interface. The memory/storage 906 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 904 may include transceiver circuitry and radio frequency front module (RFEM) that allows the UE 900 to communicate with other devices over a radio access network. The RF interface circuitry 904 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 916 and proceed to filter and amplify (with a low-noise amplifier) the signal. The signal may be provided to a receiver of the transceiver that down-converts the RF signal into a baseband signal that is provided to the baseband processor of the processors 902.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 916. In various implementations, the RF interface circuitry 904 may be configured to transmit/receive signals in a manner compatible with NR access technologies.

The antenna(s) 916 may include one or more antenna elements to convert electrical signals into radio waves to travel through the air and to convert received radio waves into electrical signals. The antenna elements may be arranged into one or more antenna panels. The antenna(s) 916 may have antenna panels that are omnidirectional, directional, or a combination thereof to enable beamforming and multiple input, multiple output communications. The antenna(s) 916 may include microstrip antennas, printed antennas fabricated on the surface of one or more printed circuit boards, patch antennas, phased array antennas, etc. The antenna(s) 916 may have one or more panels designed for specific frequency bands including bands in FR1 or FR2.

The user interface 908 includes various input/output (I/O) devices designed to enable user interaction with the UE 900. The user interface 908 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 900.

The sensors 910 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors);

pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 912 may include software and hardware elements that operate to control particular devices that are embedded in the UE 900, attached to the UE 900, or otherwise communicatively coupled with the UE 900. The driver circuitry 912 may include individual drivers allowing other components to interact with or control various input/output (I/O) devices that may be present within, or connected to, the UE 900. For example, driver circuitry 912 may include a display driver to control and allow access to a display device, a touchscreen driver to control and allow access to a touchscreen interface, sensor drivers to obtain sensor readings of sensors 910 and control and allow access to sensors 910, drivers to obtain actuator positions of electro-mechanic components or control and allow access to the electro-mechanic components, a camera driver to control and allow access to an embedded image capture device, audio drivers to control and allow access to one or more audio devices.

The PMIC 914 may manage power provided to various components of the UE 900. In particular, with respect to the processors 902, the PMIC 914 may control power-source selection, voltage scaling, battery charging, or DC-to-DC conversion.

In some implementations, the PMIC 914 may control, or otherwise be part of, various power saving mechanisms of the UE 900. A battery 918 may power the UE 900, although in some examples the UE 900 may be mounted deployed in a fixed location, and may have a power supply coupled to an electrical grid. The battery 918 may be a lithium ion battery, a metal-air battery, such as a zinc-air battery, an aluminum-air battery, a lithium-air battery, and the like. In some implementations, such as in vehicle-based applications, the battery 918 may be a typical lead-acid automotive battery.

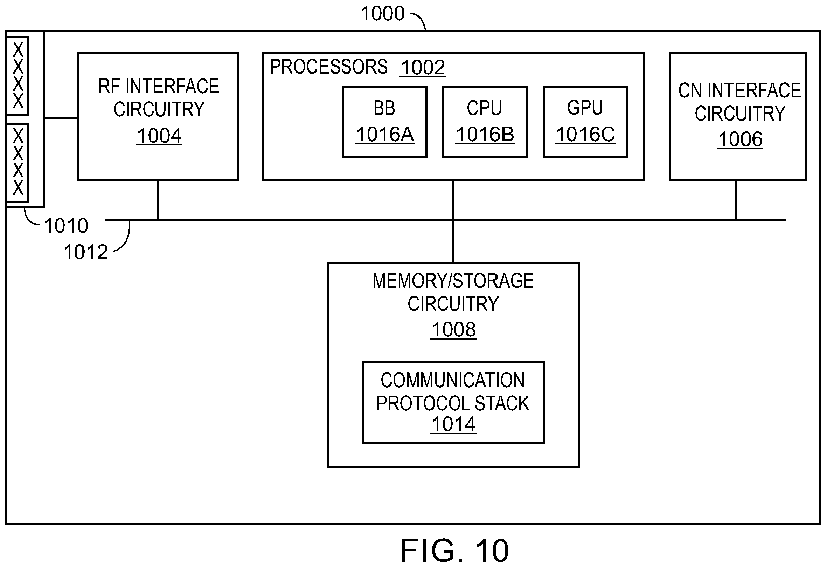

FIG. 10 illustrates an example access node 1000 (e.g., a base station or gNB), according to some implementations. The access node 1000 may be similar to and substantially interchangeable with base stations 110. The access node 1000 may include processors 1002, RF interface circuitry 1004, core network (CN) interface circuitry 1006, memory/storage circuitry 1008, and one or more antenna(s) 1010.

The components of the access node 1000 may be coupled with various other components over one or more interconnects 1012. The processors 1002, RF interface circuitry 1004, memory/storage circuitry 1008 (including communication protocol stack 1014), antenna(s) 1010, and interconnects 1012 may be similar to like-named elements shown and described with respect to FIG. 9. For example, the processors 1002 may include processor circuitry such as, for example, baseband processor circuitry (BB) 1016A, central processor unit circuitry (CPU) 1016B, and graphics processor unit circuitry (GPU) 1016C.

The CN interface circuitry 1006 may provide connectivity to a core network, for example, a 5th Generation Core network (5GC) using a 5GC-compatible network interface protocol such as carrier Ethernet protocols, or some other suitable protocol. Network connectivity may be provided to/from the access node 1000 via a fiber optic or wireless backhaul. The CN interface circuitry 1006 may include one or more dedicated processors or FPGAs to communicate using one or more of the aforementioned protocols. In some implementations, the CN interface circuitry 1006 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 1000 that operates in an NR or 5G system (for example, a gNB), and the term "E-UTRAN node" or the like may refer to an access node 1000 that operates in an LTE or 4G system (e.g., an eNB). According to various implementations, the access node 1000 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 1000 may be implemented as one or more software entities running on server computers as part of a virtual network, which may be referred to as a CRAN and/or a virtual baseband unit pool (vBBUP). In V2X scenarios, the access node 1000 may be or act as a "Road Side Unit." The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

Example 1 includes one or more processors configured to, when executing instructions stored in a memory, perform operations including: receiving, from RF circuitry, a PSSCH transmission via a slot $i$ and a sub-channel $j$; determining, within an RB set $k$ and a PSFCH transmission occasion $n$, at least one interlace to use for a PSFCH transmission based at least in part on an index of the slot i, an index of the sub-channel $j$, a PSFCH periodicity, and a quantity of sub-channels in the RB set $k$; and instructing the RF circuitry to transmit the PSFCH transmission via the at least one interlace in the RB set $k$ during the PSFCH transmission occasion $n$, the PSFCH transmission including feedback for the PSSCH transmission.

Example 2 includes the one or more processors of example 1, the operations further including receiving, from the RF circuitry, control signaling that configures a dedicated interlace structure for the PSFCH transmission, where determining the at least one interlace includes allocating one dedicated interlace for the PSFCH transmission in accordance with the control signaling.

Example 3 includes the one or more processors of any of examples 1 to 2, the operations further including receiving, from the RF circuitry, control signaling that indicates a set of PRBs to use for the PSFCH transmission in the candidate PSFCH transmission occasion $n$, where determining the total number of PRBs of the interlace is based at least in part on the control signaling.

Example 4 includes the one or more processors of any of examples 1 to 3, the operations further including determining a total number of PRBs of an interlace for the PSFCH transmission that includes HARQ-ACK information for the PSSCH transmission.

Example 5 includes the one or more processors of any of examples 1 to 4, the operations further including determining a set of interlaces that include a number of interlaces for the HARQ-ACK information, where the set of interlaces are indexed in an ascending order of interlace indexes.

Example 6 includes the one or more processors of any of examples 1 to 5, where for each interlace of the set of interlaces, all PRBs in the interlace are available for PSFCH transmission.

Example 7 includes the one or more processors of any of examples 1 to 6, where determining the at least one interlace includes allocating the at least one interlace starts in an ascending order of slot index and continues in an ascending order of sub-channel index.

Example 8 includes the one or more processors of any of examples 1 to 7, where the at least one interlace includes one or more PRBs in a resource pool of an unlicensed radio frequency spectrum band.

Example 9 includes the one or more processors of any of examples 1 to 8, where determining the at least one interlace includes allocating $\left[\left(i + j \cdot N_{\text{PSSCH}}^{\text{PSFCH}}\right) \cdot M_{\text{subch, slot},k}^{\text{PSFCH},n}, \left(i + 1 + j \cdot N_{\text{PSSCH}}^{\text{PSFCH}}\right) \cdot M_{\text{subch, slot},k}^{\text{PSFCH},n} - 1\right]$ interlaces from the number of interlaces to the slot $i$ and the sub-channel $j$.

Example 10 includes the one or more processors of any of examples 1 to 9, where $N_{\text{PSSCH}}^{\text{PSFCH}}$ is the PSFCH periodicity, $M_{\text{subch, slot},k}^{\text{PSFCH},n} = M_{\text{interlace},k}^{\text{PSFCH},n} / \left(N_{\text{subch}}^{k} \cdot N_{\text{PSSCH}}^{\text{PSFCH}}\right)$, $N_{\text{subch}}^{k}$ is the quantity of sub-channels in the RB set $k$, $M_{\text{interlace},k}^{\text{PSFCH},n}$ is the number of interlaces for the feedback in the candidate PSFCH occasion $n$, $0 \le i < N_{\text{PSSCH}}^{\text{PSFCH}}$, and $0 \le j < N_{\text{subch}}^{k}$.

Example 11 includes the one or more processors of any of examples 1 to 10, the operations further including determining a number of PSFCH resources available for multiplexing the feedback in the PSFCH transmission according to $R_{\text{PRB, CS}}^{\text{PSFCH}} = N_{\text{type}}^{\text{PSFCH}} \cdot M \cdot N_{\text{CS}}^{\text{PSFCH}}$, where $R_{\text{PRB, CS}}^{\text{PSFCH}}$ is the number of available PSFCH resources and $N_{\text{CS}}^{\text{PSFCH}}$ is a number of cyclic shift pairs configured for a resource pool including the RB set $k$.

Example 12 includes the one or more processors of any of examples 1 to 11, where $N_{\text{type}}^{\text{PSFCH}} = 1, M = M_{\text{subch, slot},k}^{\text{PSFCH},n}$, and the $N_{\text{type}}^{\text{PSFCH}} \cdot M$ interlaces or PRB subsets are associated with a lowest sub-channel index within the RB set $k$.

Example 13 includes the one or more processors of any of examples 1 to 12, where the RB set $k$ includes an RB set with a smallest index of the PSSCH transmission.

Example 14 includes the one or more processors of any of examples 1 to 13, where $N_{\text{type}}^{\text{PSFCH}} = N_{\text{subch}}^{\text{PSSCH}}$ and $M$ is a summation of $M_{\text{subch, slot},k}^{\text{PSFCH},n}$ .

Example 15 includes the one or more processors of any of examples 1 to 14, where $M_{\text{subch, slot},k}^{\text{PSFCH},n}$ is summed over all RB sets including resources for the PSSCH transmission, and where the $N_{\text{type}}^{\text{PSFCH}} \cdot M$ combinations of interlaces and RB sets or PRB subsets are associated with the $N_{\text{subch}}^{\text{PSSCH}}$ sub-channels of the PSSCH transmission.

Example 16 includes the one or more processors of any of examples 1 to 15, where the PSFCH resources are first indexed according to an ascending order of interlace or PRB subset index, second according to ascending order of RB set index, and third according to an ascending order of cyclic shift pair index from the $N_{\text{CS}}^{\text{PSFCH}}$ cyclic shift pairs.

Example 17 includes the one or more processors of any of examples 1 to 16, the operations further including determining an index of a PSFCH resource for the PSFCH transmission including the feedback associated with the PSSCH transmission according to $(P_{\text{ID}} + M_{\text{ID}}) \bmod R_{\text{PRB, CS}}^{\text{PSFCH}}$, where $P_{\text{ID}}$ is a physical layer source ID provided by a sidelink control information (SCI) format that schedules the PSSCH transmission, $M_{\text{ID}}$ is equal to zero or a value associated with an identifier of the UE that receives the PSSCH transmission and $R_{\text{PRB, CS}}^{\text{PSFCH}}$ is a number of PSFCH resources available for multiplexing the feedback in the PSFCH transmission.

Example 18 is a UE including: one or more processors; and one or more memory devices storing instructions that, when executed by the one or more processors, cause the UE to perform operations including: receiving a PSSCH transmission via a slot $i$ and a sub-channel $j$; determining, within an RB set $k$ and a PSFCH transmission occasion $n,$ at least one interlace to use for a PSFCH transmission based at least in part on an index of the slot $i$, an index of the sub-channel $j$, a PSFCH periodicity, and a quantity of sub-channels in the RB set $k$; and transmitting the PSFCH transmission via the at least one interlace in the RB set $k$ during the PSFCH transmission occasion $n$, the PSFCH transmission including feedback for the PSSCH transmission.

Example 19 is the UE of example 18, the operations further including receiving control signaling that configures a dedicated interlace structure for the PSFCH transmission, where determining the at least one interlace includes allocating one dedicated interlace for the PSFCH transmission in accordance with the control signaling.

Example 20 is a method including: receiving a PSSCH transmission via a slot $i$ and a sub-channel $j$; determining, within an RB set $k$ and a PSFCH transmission occasion $n,$ at least one interlace to use for a PSFCH transmission based at least in part on an index of the slot $i$, an index of the sub-channel $j$, a PSFCH periodicity, and a quantity of sub-channels in the RB set $k$; and transmitting the PSFCH transmission via the at least one interlace in the RB set $k$ during the PSFCH transmission occasion $n$, the PSFCH transmission including feedback for the PSSCH transmission.

Example 21 includes a non-transitory computer storage medium encoded with instructions that, when executed by one or more processors, cause the one or more processors to perform one or more operations described in any of examples 1-20, or any other method or process described herein.

Example 22 includes an apparatus including logic, modules, and/or circuitry (e.g., processing circuitry and/or RF circuitry) configured to perform one or more operations described in any of examples 1-20, or any other method or process described herein.

Example 23 includes an apparatus including one or more processors (e.g., one or more baseband processors) configured to perform one or more operations described in any of examples 1-20, or any other method or process described herein.

Example 24 includes a system configured to perform one or more operations described in any of examples 1-20, or any other method or process described herein.

Example 25 includes a device configured to perform one or more operations described in any of examples 1-20, or any other method or process described herein.

Any of the above described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

**Claims**

1. A method performed by one or more processors, comprising:

   receiving, from radio frequency (RF) circuitry, a physical sidelink shared channel (PSSCH) transmission via a slot $i$ and a sub-channel $j$;
   determining, within a resource block (RB) set $k$ and a physical sidelink feedback channel (PSFCH) transmission occasion $n$, at least one interlace to use for a PSFCH transmission based at least in part on an index of the slot $i$, an index of the sub-channel $j$, a PSFCH periodicity, and a quantity of sub-channels in the RB set $k$; and
   instructing the RF circuitry to transmit the PSFCH transmission via the at least one interlace in the RB set $k$ during the PSFCH transmission occasion $n$, the PSFCH transmission comprising feedback for the PSSCH transmission.

2. The method of claim 1, the operations further comprising receiving, from the RF circuitry, control signaling that configures a dedicated interlace structure for the PSFCH transmission, wherein determining the at least one interlace comprises allocating one dedicated interlace for the PSFCH transmission in accordance with the control signaling.

3. The method of claim 1 or claim 2, the operations further comprising receiving, from the RF circuitry, control signaling that indicates a set of physical resource blocks (PRBs) to use for the PSFCH transmission in the PSFCH transmission occasion $n$, wherein determining the at least one interlace is based at least in part on the control signaling.

4. The method of any preceding claim, the operations further comprising determining a total number of physical resource blocks (PRBs) of an interlace for the PSFCH transmission that includes hybrid automatic repeat request (HARQ)-acknowledgement (ACK) information for the PSSCH transmission.

5. The method of claim 4, the operations further comprising determining a set of interlaces that include a number of interlaces for the HARQ-ACK information, wherein the set of interlaces are indexed in an ascending order of interlace indexes, wherein optionally for each interlace of the set of interlaces, all PRBs in the interlace are available for PSFCH transmission.

6. The method of any preceding claim, wherein determining the at least one interlace comprises allocating the at least one interlace (i) in an ascending order of slot index and (ii) in an ascending order of sub-channel index, or one or more physical resource blocks (PRBs) in a resource pool of an unlicensed radio frequency spectrum band.

7. The method of any preceding claim, wherein determining the at least one interlace comprises allocating $\left[\left(i+j\cdot N_{\text{PSSCH}}^{\text{PSFCH}}\right)\cdot M_{\text{subch, slot},k}^{\text{PSFCH,n}}, \left(i+1+j\cdot N_{\text{PSSCH}}^{\text{PSFCH}}\right)\cdot M_{\text{subch, slot},k}^{\text{PSFCH,n}} - 1\right]$ interlaces from a number of interlaces to the slot $i$ and the sub-channel $j$.

8. The method of claim 7, wherein $N_{\text{PSSCH}}^{\text{PSFCH}}$ is the PSFCH periodicity, $M_{\text{subch, slot},k}^{\text{PSFCH,n}} = M_{\text{interlace},k}^{\text{PSFCH,n}}/\left(N_{\text{subch}}^{k}\cdot N_{\text{PSSCH}}^{\text{PSFCH}}\right)$, $N_{\text{subch}}^{k}$ is the quantity of sub-channels in the RB set $k$, $M_{\text{interlace},k}^{\text{PSFCH,n}}$ is a number of interlaces for the feedback in the PSFCH transmission occasion $n$, $0 \leq i < N_{\text{PSSCH}}^{\text{PSFCH}}$, and $0 \leq j < N_{\text{subch}}^{k}$.

9. The method of claim 7, the operations further comprising determining a number of PSFCH resources available for multiplexing the feedback in the PSFCH transmission according to $R_{\text{PRB, CS}}^{\text{PSFCH}} = N_{\text{type}}^{\text{PSFCH}}\cdot M\cdot N_{\text{CS}}^{\text{PSFCH}}$, wherein

$R_{\text{PRB, CS}}^{\text{PSFCH}}$ is the number of available PSFCH resources and $N_{\text{CS}}^{\text{PSFCH}}$ is a number of cyclic shift pairs configured for a resource pool comprising the RB set $k$, wherein $N_{\text{type}}^{\text{PSFCH}} = N_{\text{subch}}^{\text{PSSCH}}$ and $M$ may be a summation of $M_{\text{subch, slot},k}^{\text{PSFCH,n}}$..

10. The method of claim 9, wherein $N_{\text{type}}^{\text{PSFCH}} = 1$, $M = M_{\text{subch, slot},k}^{\text{PSFCH,n}}$, and the $N_{\text{type}}^{\text{PSFCH}} \cdot M$ interlaces or physical resource block (PRB) subsets are associated with a lowest sub-channel index within the RB set $k$, wherein the RB set $k$ may comprise an RB set with a smallest index of the PSSCH transmission.

11. The method of claim 10, wherein $M_{\text{subch, slot},k}^{\text{PSFCH,n}}$ is summed over all RB sets including resources for the PSSCH transmission, and wherein the $N_{\text{type}}^{\text{PSFCH}} \cdot M$ combinations of interlaces and RB sets or physical resource block (PRB) subsets are associated with the $N_{\text{subch}}^{\text{PSSCH}}$ sub-channels of the PSSCH transmission.

12. The method of any of claims 9 to 11, wherein the PSFCH resources are first indexed according to an ascending order of interlace or physical resource block (PRB) subset index, second according to ascending order of RB set index, and third according to an ascending order of cyclic shift pair index from the $N_{\text{CS}}^{\text{PSFCH}}$ cyclic shift pairs.

13. The method of any preceding claim, the operations further comprising determining an index of a PSFCH resource for the PSFCH transmission comprising the feedback associated with the PSSCH transmission according to $(P_{\text{ID}} + M_{\text{ID}}) mod R_{\text{PRB, CS}}^{\text{PSFCH}}$, wherein $P_{\text{ID}}$ is a phisical layer source ID provided by a sidelink control information (SCI) format that schedules the PSSCH transmission, $M_{\text{ID}}$ is equal to zero or a value associated with an identifier of the UE that receives the PSSCH transmission, and $R_{\text{PRB, CS}}^{\text{PSFCH}}$ is a number of PSFCH resources available for multiplexing the feedback in the PSFCH transmission.

14. One or more processors configured to perform the method of any of claims 1 to 13.

15. A user equipment (UE) comprising:

   one or more processors configured to perform the method of any of claims 1 to 13;
   radio frequency (RF) circuitry; wherein

   the RF circuitry receives a physical sidelink shared channel (PSSCH) transmission via a slot $i$ and a sub-channel $j$;
   and
   the RF circuitry transmits the PSFCH transmission via the at least one interlace in the RB set $k$ during the PSFCH transmission occasion $n$, the PSFCH transmission comprising feedback for the PSSCH transmission.

FIG. 1

FIG. 2

UE1  UE2

PRB FOR PSFCH FOR UE2

RB SET (e.g., 20 Mhz)

PRB FOR PSFCH FOR UE1

TIME DOMAIN

INTERLACE 1
INTERLACE 2
INTERLACE 3
INTERLACE 4
COMMON INTERLACE

EP 4 507 226 A1

UE1 UE2

RB SET
(e.g., 20 Mhz)

TIME DOMAIN

PSSCH

PSFCH

PSFCH

PSFCH

PSFCH

PSFCH

PSFCH

| | |
|---|---|
| INTERLACE 1 | |
| INTERLACE 2 | |
| INTERLACE 3 | |
| INTERLACE 4 | |
| COMMON INTERLACE | |

FIG. 3

EP 4 507 226 A1

| PSSCH | PSSCH | P S F C H | PSSCH | PSSCH | P S F C H |

TIME DOMAIN

# FIG. 4A

TIME DOMAIN

## FIG. 4B

TIME DOMAIN

FIG. 4C

EP 4 507 226 A1

FIG. 5A

$$(i + j)mod N_{interlace,set}^{PSFCH}$$

FIG. 5B

RESOURCE BLOCK

| 8 | 9 |
|---|---|
| 6 | 7 |
| 4 | 5 |
| 2 | 3 |
| 0 | 1 |

PSSCH INTERLACE

SLOT          SLOT

## FIG. 6A

PSFCH INTERLACE

| 4 | 9 |
|---|---|
| 3 | 8 |
| 2 | 7 |
| 1 | 6 |
| 0 | 5 |

INTERLACE

$$(i + j \cdot N_{PSSCH}^{PSFCH} \cdot N_{reTx}) mod N_{interlace,set}^{PSFCH}$$

CYCLIC SHIFT INDEX

## FIG. 6B

$R_{interlace,CS}^{PSFCH}$ CYCLIC SHIFT PAIR

1 | 2 | 3

⋮

1 | 2 | 3

STEP 6: PSFCH RESOURCES ARE
INDEXED WITH CYCLIC SHIFT ONLY.

1 INTERLACE

1 | 2 | 3

PRB

1 | 2 | 3

CYCLIC
SHIFT
PAIR

FIG. 7

800

DETERMINE TOTAL NUMBER OF PSFCH INTERLACES OVER ONE RESOURCE BLOCK SET IN EACH PSFCH PERIODICITY, WHEREIN THE TOTAL NUMBER OF PSFCH INTERLACES FOR EACH PSSCH / PSCCH TRANSMISSION IS 1 — 802

ALLOCATE THE PSFCH INTERLACE FOR THE CORRESPONDING PSSCH / PSCCH TRANSMISSION — 804

DETERMINE THE NUMBER OF PSFCH RESOURCES AVAILABLE FOR MULTIPLEXING HARQ-ACK IN A PSFCH TRANSMISSION, WHEREIN PSFCH RESOURCES ARE INDEXED ACCORDING TO ASCENDING ORDER OF THE CYCLIC SHIFT PAIR — 806

DETERMINE THE INDICES OF PSFCH RESOURCES FOR A PSFCH TRANSMISSION WITH HARQ-ACK INFORMATION IN RESPONSE TO A PSSCH RECEPTION — 808

TRANSMIT PSFCH ON PSFCH RESOURCES TO OTHER UE VIA SIDELINE IN UNLICENSED SPECTRUM — 810

FIG. 8A

801

| RECEIVE PSSCH TRANSMISSION VIA SLOT AND SUB-CHANNEL | — 812 |

| DETERMINE, WITHIN AN RB SET AND A PSFCH TRANSMISSION OCCASION, AT LEAST ONE INTERLACE TO USE FOR A PSFCH TRANSMISSION BASED ON AN INDEX OF THE SLOT, AN INDEX OF THE SUB-CHANNEL, A PSFCH PERIODICITY, AND A QUANTITY OF SUB-CHANNELS IN THE RB SET | — 814 |

| TRANSMIT THE PSFCH TRANSMISSION VIA THE AT LEAST ONE INTERLACE IN THE RB SET DURING THE PSFCH TRANSMISSION OCCASION, THE PSFCH TRANSMISSION INCLUDING FEEDBACK FOR THE PSSCH TRANSMISSION | — 816 |

# FIG. 8B

FIG. 9

EP 4 507 226 A1

FIG. 10

EP 4 507 226 A1

## EUROPEAN SEARCH REPORT

Application Number

EP 24 19 1570

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICK MERIAS ET AL: "FL summary#5 for AI 9.4.1.2 SL-U physical channel design framework", 3GPP DRAFT; R1-2305990; TYPE DISCUSSION; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Incheon, KR; 20230522 - 20230526 26 May 2023 (2023-05-26), XP052378668, Retrieved from the Internet: URL:https://www.3gpp.org/ftp/TSG_RAN/WG1_R L1/TSGR1_113/Docs/R1-2305990.zip R1-2305990 FLS#5 for SL-U PHY channel design_v501_FL2 (for Fri online).docx [retrieved on 2023-05-26] * page 22; table 1 * * page 36 - page 37 * * page 86 - page 87 * * page 96 - page 97 * * page 103 - page 105 * ----- | 1-15 | INV. H04L1/1829 |
| X | GARCIA MARIO H CASTANEDA ET AL: "A Tutorial on 5G NR V2X Communications", IEEE COMMUNICATIONS SURVEYS & TUTORIALS, IEEE, USA, vol. 23, no. 3, 3 February 2021 (2021-02-03), pages 1972-2026, XP011873186, DOI: 10.1109/COMST.2021.3057017 [retrieved on 2021-08-19] * page 1982 - page 1986; figures 4, 6, 10; table VI * * page 1990 - page 1992; figures 10, 11, 12 * ----- | 1-15 | TECHNICAL FIELDS SEARCHED (IPC) H04L |

-/--

The present search report has been drawn up for all claims

| Place of search | Date of completion of the search | Examiner |
|---|---|---|
| The Hague | 10 December 2024 | Khirallah, Chadi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 19 1570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN CHENG ET AL: "Physical channel design for sidelink operation over unlicensed spectrum", 3GPP DRAFT; R1-2304662; TYPE DISCUSSION; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Incheon, KR; 20230522 - 20230526 15 May 2023 (2023-05-15), XP052310117, Retrieved from the Internet: URL:https://www.3gpp.org/ftp/TSG_RAN/WG1_R L1/TSGR1_113/Docs/R1-2304662.zip R1-2304662.docx [retrieved on 2023-05-15] * the whole document * | 1-15 | |
| X | APPLE: "Sidelink Physical Channel Design Framework for Unlicensed Spectrum", 3GPP DRAFT; R1-2305244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Incheon, Korea; 20230522 - 20230526 15 May 2023 (2023-05-15), XP052385645, Retrieved from the Internet: URL:https://ftp.3gpp.org/tsg_ran/WG1_RL1/T SGR1_113/Docs/R1-2305244.zip R1-2305244 Sidelink Physical Channel Design Framework for Unlicensed Spectrum.docx [retrieved on 2023-05-15] * the whole document * | 1-15 | **TECHNICAL FIELDS SEARCHED (IPC)** |

-/--

The present search report has been drawn up for all claims

| Place of search | Date of completion of the search | Examiner |
|---|---|---|
| The Hague | 10 December 2024 | Khirallah, Chadi |

EPO FORM 1503 03.82 (P04C01)

Europäisches
Patentamt

European
Patent Office

Office européen
des brevets

# EUROPEAN SEARCH REPORT

**Application Number**

EP 24 19 1570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/028000 A1 (SI HONGBO [US] ET AL) 26 January 2023 (2023-01-26) * claims 1, 5, 6, 9, 10, 11; figures 6, 7, 9, 10, 13 * | 1-15 | |
| A | US 2023/136864 A1 (LEI HAIPENG [CN] ET AL) 4 May 2023 (2023-05-04) * claims 5, 12; figures 4, 5, 6, 7 * | 1-15 | |

TECHNICAL FIELDS
SEARCHED       (IPC)

The present search report has been drawn up for all claims

| Place of search | Date of completion of the search | Examiner |
|---|---|---|
| The Hague | 10 December 2024 | Khirallah, Chadi |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 1570

This annex lists the patent family members relating to the patent documents cited in  the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | | Publication date |
|---|---|---|---|---|
| US 2023028000 A1 | 26-01-2023 | CN | 117716773 A | 15-03-2024 |
| | | EP | 4356670 A1 | 24-04-2024 |
| | | KR | 20240035475 A | 15-03-2024 |
| | | US | 2023028000 A1 | 26-01-2023 |
| | | WO | 2023003221 A1 | 26-01-2023 |
| US 2023136864 A1 | 04-05-2023 | CN | 115428565 A | 02-12-2022 |
| | | EP | 4128958 A1 | 08-02-2023 |
| | | KR | 20220159995 A | 05-12-2022 |
| | | US | 2023136864 A1 | 04-05-2023 |
| | | WO | 2021189428 A1 | 30-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63531706